# FASCICULE DE BREVET EUROPEEN

(11) **EP 4 105 471 B1**
(45) Date de publication et mention de la délivrance du brevet: **12.03.2025**
(21) Numéro de dépôt: 22178831.8
(22) Date de dépôt: 14.06.2022
(51) Int. Cl.: F02C 9/42, F02C 7/262

(54) **RALLUMAGE D'UNE PLURALITÉ DE MOTEURS D'AÉRONEF EN VOL**
NEUZÜNDUNG EINER VIELZAHL VON TRIEBWERKEN EINES FLUGZEUGS WÄHREND DES FLUGS
RE-IGNITION OF A PLURALITY OF AIRCRAFT ENGINES IN FLIGHT

(30) Priorité: 18.06.2021 FR 2106511
(43) Date de publication de la demande: 21.12.2022
(73) Titulaire: Airbus Operations (S.A.S.), 31060 Toulouse Cedex 9 (FR)
(72) Inventeur: CONTE, Claudia, 31060 TOULOUSE (FR); FLAMANT-BATI, Quentin-Alexandre, 31060 TOULOUSE (FR); COLLAS, Xavier, 31060 TOULOUSE (FR); PINERI, Marie-Claire, 31060 TOULOUSE (FR)
(74) Mandataire: Cabinet Le Guen Maillet

(56) Documents cités:
- EP-A2- 2 636 596
- FR-A1- 2 942 001
- US-A1- 2018 201 386

## Description

### DOMAINE TECHNIQUE

La présente invention concerne la gestion de rallumage de moteurs d'aéronef en vol.

### ETAT DE LA TECHNIQUE ANTERIEURE

L'extinction moteur en vol est un incident connu en aéronautique. Dans le cas d'une extinction de moteur à turbine, ce phénomène est désigné par « flame out » en anglais pour illustrer l'arrêt de la combustion.

L'extinction moteur peut avoir de nombreuses origines : défaut d'alimentation (par exemple, panne de carburant pour un moteur thermique), pompage, manque d'oxygène à haute altitude, ingestion (e.g., d'oiseaux) ...

Il est peu probable que l'incident en lui-même entraîne une perte de contrôle de l'aéronef, car ceux-ci sont conçus pour continuer de voler même en cas de panne moteur. La suite du vol s'effectue toutefois en mode dégradé : perte de poussée, perte partielle d'alimentation électrique et/ou hydraulique et/ou pneumatique.

Il incombe alors au pilote de tenter de rallumer (« relight » en anglais) un moteur éteint en vol, dès lors qu'il/elle juge prudent de le faire. Lorsque plusieurs moteurs sont simultanément éteints, le pilote va chercher à rallumer au moins un moteur pour pouvoir atterrir sur un aéroport de déroutement. Le pilote va tenter de rallumer les moteurs à tour de rôle, jusqu'à trouver au moins un moteur qui puisse se rallumer. Cette procédure peut être longue, d'autant que la source d'énergie pneumatique ou électrique équipant l'aéronef (selon la technologie des systèmes de démarrage des moteurs équipant l'aéronef) n'est pas dimensionnée pour fournir suffisamment d'énergie afin de tenter de rallumer plusieurs moteurs à la suite dans un bref laps de temps, ce qui retarde aussi le potentiel rallumage d'au moins un moteur.

Il est alors souhaitable de pallier ces inconvénients de l'état de la technique. Il est notamment souhaitable de fournir une solution qui permette d'accélérer le rallumage d'au moins un moteur lorsque plusieurs moteurs d'un aéronef sont éteints en vol.

A noter qu'il est connu le document EP 2636596 A2, qui divulgue un système de démarrage de moteur électrique de giravion, qui comprend un contrôleur qui sélectionne au moins une parmi une pluralité de sources d'alimentation pour alimenter un démarreur du moteur électrique.

### EXPOSE DE L'INVENTION

Selon la revendication 1, il est alors proposé un procédé de rallumage de plusieurs moteurs éteints parmi un ensemble de *N* moteurs d'un aéronef en vol, *N* ≥ *2,* le procédé étant implémenté par un système de gestion automatisée de rallumage en vol des moteurs qui inclut des contrôleurs, chaque moteur de l'aéronef étant géré par un dit contrôleur, dans lequel chaque contrôleur, qui est en charge d'un dit moteur *i* dudit ensemble, *i = 1,...,N,* et qui détecte que ledit moteur *i* est éteint, effectue les étapes suivantes : couper l'alimentation en énergie dudit moteur i ; effectuer une mise en ventilation dudit moteur i ; vérifier si au moins un autre moteur dudit ensemble est éteint ; lorsqu'aucun autre moteur dudit ensemble est éteint, effectuer (408) une tentative de rallumage dudit moteur *i.* De plus, lorsqu'au moins un autre moteur *j, j = 1, ...,N, j* ≠ *i,* dudit ensemble est éteint, au moins un dit contrôleur effectue une priorisation de rallumage de moteurs incluant les étapes suivantes : collecter, auprès des contrôleurs en charge desdits moteurs, des informations concernant un état de santé de chaque moteur ; déterminer, à partir des informations collectées, une information représentative d'une probabilité de rallumage de chaque moteur éteint ; déterminer un ordre séquentiel de rallumage des moteurs éteints, en fonction des informations représentatives de la probabilité de rallumage de chaque moteur éteint ; et maintenir en ventilation le moteur i, par le contrôleur qui est en charge dudit moteur *i,* jusqu'à sélection dudit moteur *i* dans l'ordre séquentiel de rallumage des moteurs éteints. Ainsi, grâce à leur mise en ventilation, les moteurs éteints sont rapidement mis en conditions de potentiel rallumage, et la priorisation ainsi effectuée permet, dans la mesure du possible, que l'état opérationnel d'aéronef soit amélioré au plus vite. Si au moins un moteur peut être redémarré, la sélection adéquate de moteur à rallumer est réalisée.

Selon un mode de réalisation particulier, les informations collectées incluent : une indication d'un mode de fonctionnement dans lequel se trouve le moteur en question ; une indication de vibrations captées par des capteurs du moteur en question ; une indication de température captée par des capteurs du moteur en question ; une indication de statut d'un système de démarrage du moteur en question ; et une indication de statut d'alimentation en énergie du moteur en question.

Selon un mode de réalisation particulier, l'information représentative de la probabilité de rallumage d'un dit moteur est un score d'état de santé dudit moteur, et dans lequel le score d'état de santé dépend : d'une marge de température dudit moteur par rapport à un ou plusieurs premiers seuils prédéfinis ; d'une valeur pic de vibrations captées au niveau dudit moteur durant le vol par rapport à un ou plusieurs deuxièmes seuils prédéfinis ; d'un état opérationnel d'un système de démarrage dudit moteur ; et d'un état opérationnel de l'alimentation en énergie dudit moteur.

Selon un mode de réalisation particulier, chaque contrôleur, qui est en charge d'un dit moteur *i* dudit ensemble, *i = 1, ...,N,* et qui détecte que ledit moteur *i* est éteint, effectue les étapes suivantes : déterminer si un auto-rallumage du moteur *i* est en cours ; lorsqu'un auto-rallumage du moteur i est en cours, surveiller le déroulement de l'auto-rallumage du moteur *i ;* lorsqu'aucun auto-rallumage du moteur *i* n'est en cours ou lorsque l'auto-rallumage du moteur *i* est un échec, inclure le moteur *i* dans la priorisation de rallumage de moteurs.

Selon la revendication 5, il est également proposé un système de gestion automatisée de rallumage en vol de moteurs d'un aéronef comportant un ensemble de *N* moteurs, *N* ≥ 2, incluant des contrôleurs, chaque moteur de l'aéronef étant géré par un dit contrôleur, dans lequel chaque contrôleur, qui est en charge d'un dit moteur *i* dudit ensemble, *i = 1,...,N,* et qui détecte que ledit moteur *i* est éteint, inclut de la circuiterie électronique configurée pour implémenter les étapes suivantes : couper l'alimentation en énergie dudit moteur *i* ; effectuer une mise en ventilation dudit moteur *i ;*
- vérifier si au moins un autre moteur dudit ensemble est éteint ; lorsqu'aucun autre moteur dudit ensemble est éteint, effectuer une tentative de rallumage dudit moteur *i*. De plus, lorsqu'au moins un autre moteur *j, j = 1, .... N, j* ≠ *i,* dudit ensemble est éteint, au moins un dit contrôleur inclut de la circuiterie électronique configurée pour implémenter une priorisation de rallumage de moteurs incluant les étapes suivantes : collecter, auprès des contrôleurs en charge desdits moteurs, des informations concernant un état de santé de chaque moteur ; déterminer, à partir des informations collectées, une information représentative d'une probabilité de rallumage de chaque moteur éteint ; déterminer un ordre séquentiel de rallumage des moteurs éteints, en fonction des informations représentatives de la probabilité de rallumage de chaque moteur éteint ; et maintenir en ventilation le moteur *i,* par le contrôleur qui est en charge dudit moteur *i,* jusqu'à sélection dudit moteur *i* dans l'ordre séquentiel de rallumage des moteurs éteints.

Il est aussi proposé un aéronef comportant un ensemble de *N* moteurs, *N* ≥ *2,* et un système de gestion automatisée de rallumage en vol des moteurs tel qu'évoqué ci-dessus.

Il est également proposé un produit programme d'ordinateur selon la revendication 7 et un support de stockage d'informations lisible par ordinateur selon la revendication 8.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de dessus, un aéronef équipé d'un système de gestion automatisée de rallumage en vol de moteurs d'aéronef ;
[Fig. 2] illustre schématiquement un exemple d'architecture matérielle de contrôleur du système de gestion automatisée de rallumage ;
[Fig. 3] illustre schématiquement un algorithme de gestion de rallumage en vol d'un moteur éteint ;
[Fig. 4] illustre schématiquement un algorithme de gestion conjointe de rallumage en vol de plusieurs moteurs ; et
[Fig. 5] illustre schématiquement un algorithme de priorisation de rallumage en vol de plusieurs moteurs.

### EXPOSE DETAILLE DE MODES DE REALISATION

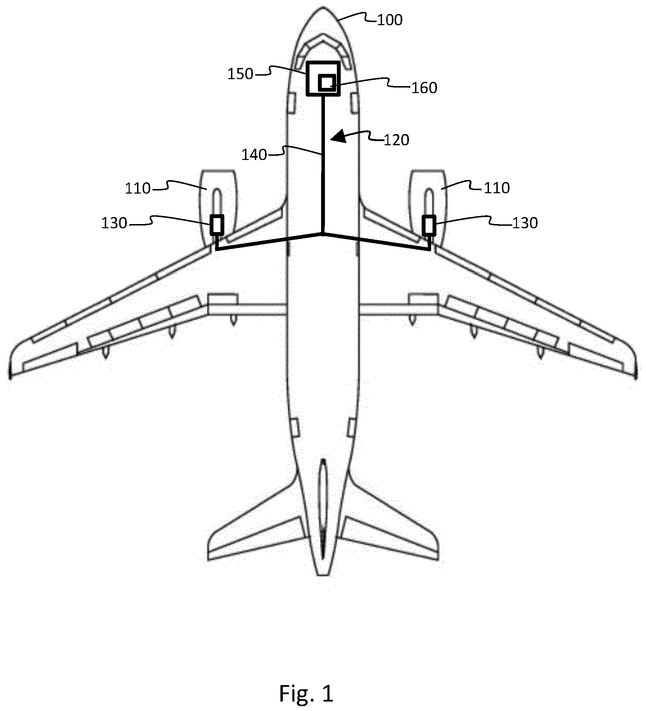

La Fig. 1 illustre schématiquement, en vue de dessus, un aéronef 100 équipé d'un ensemble de *N* moteurs (*N* ≥ 2) 110 et d'un système 120 de gestion automatisée de rallumage en vol des moteurs.

Préférentiellement, les moteurs 130 sont des turboréacteurs. Les moteurs 130 peuvent toutefois être d'un autre type, par exemple des moteurs à hydrogène.

Le système 120 comporte, au moins, un contrôleur 130 par moteur. Les contrôleurs 130 sont interconnectés entre eux, ainsi qu'à l'avionique 150, grâce à un système de communication 140.

A noter que la plupart des moteurs actuels sont équipés de circuiterie électronique avancée, avec de nombreux capteurs, pouvant inclure un système automatique autonome de rallumage, « auto-rallumage » (« auto-relight » en anglais).

Comme détaillé ci-après, le système 120 implémente une fonction de gestion conjointe de rallumage en vol des moteurs, lorsque plusieurs moteurs sont éteints. Un moteur éteint est un moteur dont les parties tournantes sont à l'arrêt, ou un moteur qui ne fournit aucune poussée mais dont la soufflante est en rotation, entrainée par l'air à la manière d'une éolienne (on parle de ventilation (« windmilling » en anglais). Par opposition, un moteur en cours d'auto-rallumage, en cours de rallumage (soit par action du pilote, soit de manière automatique), ou en en marche (les parties tournantes tournent et le moteur fournit une poussée, « running » en anglais), n'est pas un moteur éteint.

La fonction de gestion conjointe de rallumage en vol des moteurs peut être implémentée en parallèle par les contrôleurs 130, de sorte que chaque contrôleur 130 est apte à déterminer indépendamment, mais de la même manière, quelle priorité donner à quel moteur dans l'ordre de rallumage des moteurs.

En variante, le système 120 comporte en outre un contrôleur central 160, intégré par exemple à l'avionique 150, qui détermine quelle priorité donner à quel moteur dans l'ordre de rallumage des moteurs et qui instruit les contrôleurs 130 en conséquence.

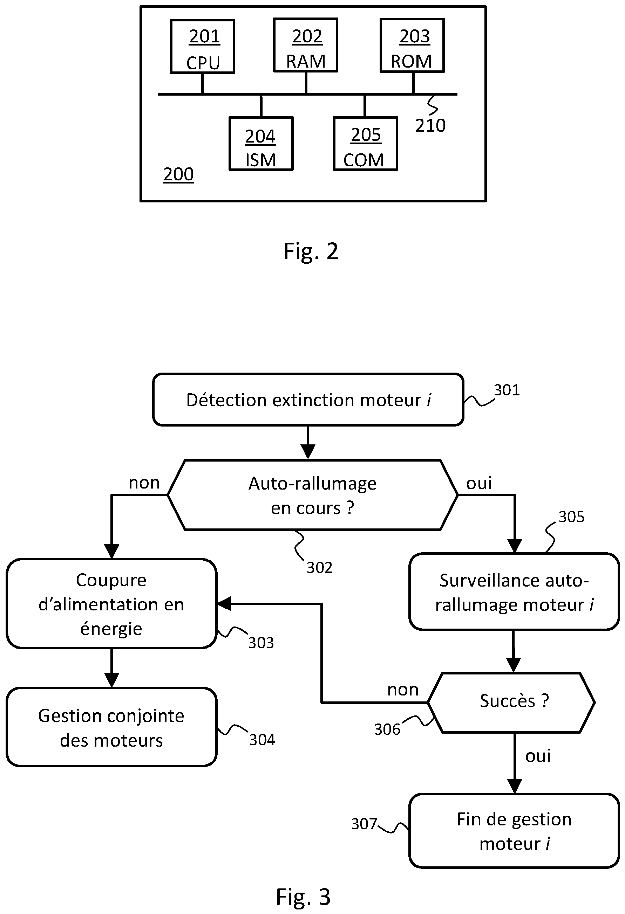

La Fig. 2 illustre schématiquement un exemple d'architecture matérielle de contrôleur 200 du système 120, que ce soit le contrôleur central 160 et/ou les contrôleurs 130.

Le contrôleur 200 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface de communication 205 permettant au contrôleur 200 d'interagir avec d'autres équipements de l'aéronef 100 et plus particulièrement avec au moins un autre contrôleur du système 120.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le contrôleur 200 est mis sous tension, le processeur 201 est capable de lire de la RAM 202 des instructions et de les exécuter. Ces instructions forment un programme d'ordinateur causant la mise en œuvre, par le processeur 201, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système 120 comprend de la circuiterie électronique agencée et configurée pour implémenter les comportements, étapes et algorithmes décrits ici.

La Fig. 3 illustre schématiquement un algorithme de gestion de rallumage en vol d'un moteur éteint. L'algorithme de la Fig. 3 est implémenté par chaque contrôleur 130.

Dans une étape 301, le contrôleur 130 en charge du moteur *i* (*i =* 1, ..., *N*) détecte une extinction dudit moteur *i.* Comme déjà indiqué, les moteurs qui équipent les aéronefs de nos jours sont équipés d'une multitude de capteurs et d'une circuiterie électronique avancée permettant de collecter et traiter en temps-réel de nombreuses informations concernant leur état opérationnel.

Dans une étape 302, le contrôleur 130 en charge du moteur *i* détermine si un auto-rallumage du moteur *i* est en cours. Un tel auto-rallumage du moteur *i* peut par exemple avoir été déclenché par un autre contrôleur intégré au moteur *i.* Par exemple, cet autre contrôleur est fourni et géré par le motoriste (par exemple dans un système de type FADEC (« Full Authority Digital Engine Control » en anglais)), et les contrôleurs 130 sont fournis et gérés par l'avionneur. Typiquement, dans un moteur à combustion, un auto-rallumage est effectué par injection de kérozène et allumage des bougies, lorsque des capteurs détectent des ratés de combustion. Si un auto-rallumage est en cours, une étape 305 est effectuée ; sinon, une étape 303 est effectuée.

Dans l'étape 303, le contrôleur 130 en charge du moteur *i* coupe l'alimentation en énergie (kérosène, hydrogène, électricité...) du moteur *i.* Par exemple, le contrôleur 130 en charge du moteur *i* coupe l'alimentation en carburant (énergie chimique) du moteur *i.,* et dans le cas d'un moteur électrique, le contrôleur 130 en charge du moteur *i* coupe l'alimentation électrique (énergie électrique) du moteur *i.* Une tentative d'auto-rallumage du moteur *i* par un autre contrôleur (par exemple intégré au moteur) serait alors inopérante. L'alimentation en énergie (kérozène, hydrogène, électricité...) du moteur i est préférentiellement coupée en amont du moteur *i* (plutôt qu'au sein du moteur *i*)*.*

Dans une étape 304 suivante, le contrôleur 130 en charge du moteur i entre dans une procédure de gestion conjointe des moteurs, de sorte à prendre en compte l'éventualité d'au moins un autre moteur 130 que le moteur *i.* Il est alors mis fin à l'algorithme de la Fig. 3.

Dans l'étape 305, le contrôleur 130 en charge du moteur *i* surveille le déroulement de l'auto-rallumage du moteur i. Et dans une étape 306, le contrôleur 130 en charge du moteur *i* vérifie si l'auto-rallumage du moteur *i* s'est déroulé avec succès. Si tel est le cas, une étape 307 est effectuée ; sinon, l'algorithme bascule à l'étape 303 de sorte à couper l'alimentation en énergie et entrer dans la procédure de gestion conjointe des moteurs. Le moteur i peut ainsi être inclus dans une procédure de priorisation de rallumage de moteurs.

Dans l'étape 307, le contrôleur 130 en charge du moteur i met fin à la gestion de rallumage en vol du moteur *i.*

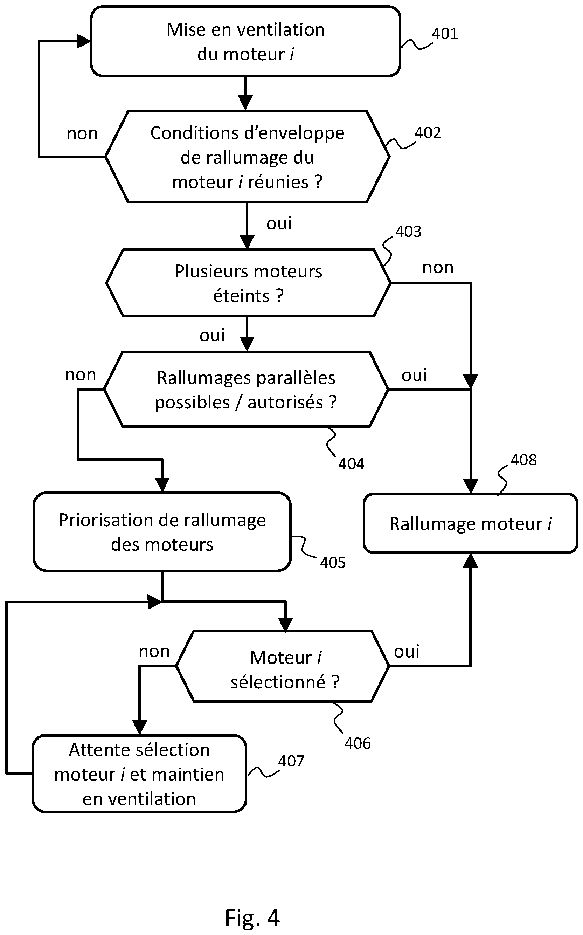

La Fig. 4 illustre schématiquement un algorithme de gestion conjointe de rallumage en vol de plusieurs moteurs éteints. L'algorithme de la Fig. 4 fournit un mode de réalisation particulier détaillé de l'étape 304 susmentionnée. Au début de l'algorithme de la Fig. 4, l'alimentation en énergie du moteur *i* est coupée (suite à l'étape 303).

Dans une étape 401, le contrôleur 130 en charge du moteur *i* effectue une mise en ventilation induite par le mouvement de l'avion dans l'air (« windmilling start » en anglais) du moteur *i.* Mettre un moteur en ventilation signifie entraîner le moteur en rotation grâce à la vitesse relative de l'air. Sur un turboréacteur, la mise en ventilation fait tourner la soufflante dans le but d'entraîner l'arbre N2. Lorsqu'un seuil de compression est atteint (e.g., 20%), un allumage des bougies peut être opéré pour rallumer le moteur sans avoir recours à un système de démarrage (pneumatique ou électrique) à la différence d'un démarrage du moteur au sol (procédure plus longue qu'un rallumage en ventilation (« windmilling start » en anglais)).

Dans une étape 402, le contrôleur 130 en charge du moteur *i* vérifie si l'aéronef 100 réunit les conditions pour permettre un rallumage moteur d'après l'enveloppe de rallumage moteur (« engine relight envelope » en anglais) applicable. Les caractéristiques de l'enveloppe de rallumage moteur sont stockées dans une mémoire à disposition dudit contrôleur 130. L'enveloppe de rallumage moteur est un profil, qui dépend au moins d'informations de vitesse de l'air (« airspeed » en anglais) et d'altitude de l'aéronef 100, et qui définit les conditions à réunir pour que la probabilité de redémarrage du moteur *i* soit supérieure ou égale à un seuil prédéfini. Ces informations en vol sont fournies par l'avionique 150 de l'aéronef 100. L'enveloppe de rallumage moteur peut définir des portions de profil spécifiquement pour un rallumage assisté par un système de démarrage (que ce soit un démarreur (« starter » en anglais) ou un système de démarrage pneumatique) et pour un rallumage en ventilation.

Dans une étape 403, le contrôleur 130 en charge du moteur i vérifie si plusieurs moteurs de l'aéronef 100 sont éteints. Les contrôleurs 130 sont interconnectés, ou connectés au contrôleur central 160, de sorte que chaque contrôleur 130 est apte à obtenir des informations concernant le mode de fonctionnement actuel de chaque moteur 110 de l'aéronef 100, ainsi que d'autres informations relatives auxdits moteurs 110 (vibrations captées, température, alimentation en énergie...). Si plusieurs moteurs 110 sont éteints, une étape 404 est effectuée ; sinon une étape 408 est effectuée.

Dans l'étape 404, le contrôleur 130 en charge du moteur *i* vérifie si un rallumage en parallèle des moteurs éteints est possible et/ou autorisé. Par exemple, le contrôleur 130 en charge du moteur i vérifie si l'aéronef 100 dispose de suffisamment d'énergie électrique pour réaliser ce démarrage en parallèle. Selon un autre exemple, le contrôleur 130 en charge du moteur i vérifie si l'aéronef 100 est d'un type autorisant un démarrage simultané de deux moteurs ou plus. Cette information est fournie par l'avionique 150 de l'aéronef 100. Si un rallumage en parallèle des moteurs éteints est possible, l'étape 408 est effectuée ; sinon, une étape 405 est effectuée.

L'étape 404 est optionnelle. Si elle est omise (par exemple, parce qu'il est préétabli dans le contrôleur 130 que, dès que plusieurs moteurs sont éteints, une procédure de priorisation des rallumages des moteurs éteints est obligatoirement effectuée), l'algorithme passe de l'étape 403 à l'étape 405 si plusieurs moteurs 110 sont éteints.

Dans l'étape 405, le contrôleur 130 en charge du moteur i entre dans une procédure de priorisation des rallumages des moteurs éteints. Cette procédure vise à définir dans quel ordre séquentiel les rallumages des moteurs éteints doivent s'opérer pour maximiser les chances de redémarrage d'au moins un moteur 110 parmi les moteurs éteints. La procédure de priorisation des rallumages des moteurs éteints peut être effectuée, de la même manière (pour obtenir le même résultat), par chacun des contrôleurs 130. En variante, la procédure de priorisation des rallumages des moteurs éteints peut être centralisée au niveau du contrôleur central 160, qui instruit ensuite en conséquence les contrôleurs 130.

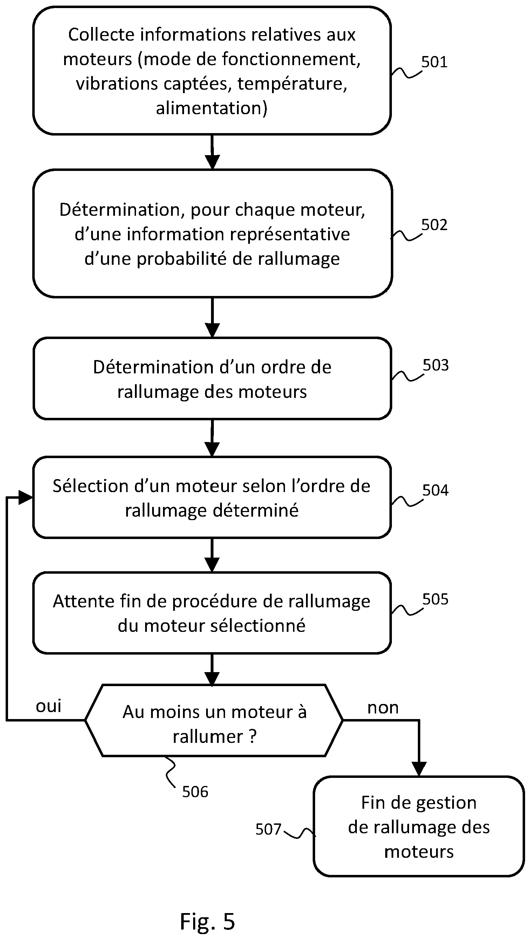

Un mode de réalisation particulier de l'étape 405 est détaillé ci-après en relation avec la Fig. 5.

Alors, dans une étape 406, le contrôleur 130 en charge du moteur *i* vérifie si le moteur *i* est sélectionné pour rallumage d'après l'ordre séquentiel déterminé à l'étape 405. Si tel est le cas, l'étape 408 est effectuée ; sinon, une étape 407 est effectuée.

Dans l'étape 407, le contrôleur 130 en charge du moteur i attend son tour d'être sélectionné d'après l'ordre séquentiel déterminé à l'étape 405. Lorsque le contrôleur 130 en charge du moteur i reçoit une information (d'un autre contrôleur 130 ou du contrôleur central 160) indiquant la fin du rallumage d'un autre moteur 110 (que ce soit avec succès ou pas), le contrôleur 130 en charge du moteur i réitère l'étape 406 pour déterminer si son tour est arrivé. Tant que son tour d'être sélectionné n'est pas arrivé (et tant qu'aucune instruction d'abandon de rallumage n'est reçue), le contrôleur 130 en charge du moteur i maintient la ventilation du moteur *i,* afin que ledit moteur *i* soit dans les meilleures conditions possibles pour être rallumé.

Dans l'étape 408, le contrôleur 130 en charge du moteur *i* effectue une tentative de rallumage du moteur *i.* Le contrôleur 130 en charge du moteur *i* réactive alors l'alimentation en énergie, qui avait été coupée à l'étape 303. Le contrôleur 130 du moteur i informe les autres contrôleurs 130, i.e. des contrôleurs 130 en charge des moteurs *j* (*j = 1,..,N, j ≠i*), du déroulement du rallumage du moteur *i.* La tentative de rallumage peut se faire avec ou sans l'aide d'un système de démarrage, selon les conditions de l'aéronef 100 par rapport à l'enveloppe de rallumage moteur.

Dans l'éventualité où la tentative de rallumage du moteur *i* échoue, le moteur *i* passe son tour et priorité est alors donnée au prochain moteur dans l'ordre séquentiel déterminé à l'étape 405. Dans un mode de réalisation particulier, une nouvelle priorisation des rallumages des moteurs éteints est effectuée en tenant compte de l'échec de rallumage du moteur i. Cela permet de prendre en compte une nouvelle situation de l'aéronef 100, et revoir en conséquence la priorisation des moteurs restants éventuellement à rallumer.

La Fig. 5 illustre schématiquement un algorithme de priorisation de rallumage en vol de plusieurs moteurs éteints. L'algorithme de la Fig. 5 fournit un mode de réalisation particulier détaillé de l'étape 405 susmentionnée. Considérons à titre illustratif que l'algorithme de la Fig. 5 est implémenté par le contrôleur central 160.

Dans une étape 501, le contrôleur central 160 collecte des informations relatives à un état de santé de chaque moteur 110. Ces informations incluent une indication du mode de fonctionnement dans lequel se trouve le moteur en question : à l'arrêt, en cours d'auto-rallumage, en ventilation, en cours de rallumage, en marche. Ces informations incluent préférentiellement une indication de vibrations captées par des capteurs du moteur 110 en question. Ces informations incluent préférentiellement une indication de température captée par des capteurs du moteur 110 en question. Ces informations incluent préférentiellement une indication de statut d'alimentation en énergie du moteur 110 en question. Ces informations incluent préférentiellement une indication de statut du système de démarrage du moteur 110 en question. Les informations peuvent être collectées ou en variante être collectées systématiquement ou, en variante, au besoin. Par exemple, les informations relatives au statut du système de démarrage du moteur 110 peuvent être collectées par le contrôleur central 160 uniquement si un redémarrage du moteur 110 en question à l'aide du système de démarrage est envisagé.

Dans une étape 502, le contrôleur central 160 détermine, pour chaque moteur 110 éteint (au vu de son état opérationnel) parmi l'ensemble des moteurs de l'aéronef 100, une information représentative d'une probabilité de rallumage dudit moteur 110, à partir des informations collectées à l'étape 501.

Dans un mode de réalisation particulier, l'information représentative de la probabilité de rallumage d'un dit moteur 110 est un score d'état de santé dudit moteur 110. Le score d'état de santé est par exemple une somme pondérée d'un ensemble de paramètres relatifs à l'aptitude dudit moteur 110 à être rallumé. Le score d'état de santé dépend alors d'une marge de température dudit moteur par rapport à un ou plusieurs seuils prédéfinis (e.g., par rapport à une limite supérieure théorique acceptable pour éviter que ledit moteur ne soit pas endommagé), d'une valeur pic de vibrations captées au niveau dudit moteur 110 durant le vol (qui pourrait être symptomatique d'une faiblesse d'un arbre moteur) par rapport à un ou plusieurs seuils prédéfinis, d'un état opérationnel du système de démarrage dudit moteur 110, d'un état opérationnel de l'alimentation en énergie (alimentation en carburant, alimentation électrique...) dudit moteur 110. Le score d'état de santé peut tenir compte de l'enveloppe de rallumage moteur. En effet, un moteur qui aurait besoin d'un rallumage par le système de démarrage d'après l'enveloppe de rallumage moteur au vu de l'altitude et de la vitesse de l'aéronef 100, et dont les informations collectées indiquent un système de démarrage défaillant, n'est pas prioritaire dans l'ordre de rallumage des moteurs éteints.

D'autres critères peuvent être utilisés, dès lors qu'ils adressent un paramètre relatif à l'aptitude dudit moteur 110 à être rallumé.

Dans une étape 503, le contrôleur central 160 détermine un ordre de rallumage des moteurs éteints, en fonction de l'information représentative de la probabilité de rallumage de chaque moteur 110 éteint. Plus la probabilité de rallumage d'un dit moteur 110 est élevée, plus ce moteur 110 est prioritaire dans l'ordre de rallumage des moteurs.

Dans une étape 504, le contrôleur central 160 sélectionne le moteur 110 le plus prioritaire selon l'ordre de rallumage déterminé à l'étape 503. Le contrôleur 130 en charge de ce moteur procède alors à une tentative de rallumage dudit moteur, conformément aux étapes 407 et 408 ci-dessus.

Dans une étape 505, le contrôleur central 160 attend que la procédure de rallumage du moteur sélectionné à l'étape 504 prenne fin, qu'elle se solde par un succès ou par un échec.

Dans une étape 506, le contrôleur central 160 vérifie s'il reste encore au moins un moteur à rallumer. Si tel est le cas, l'étape 504 est répétée et le prochain moteur 110 le plus prioritaire selon l'ordre de rallumage déterminé à l'étape 503 est sélectionné pour rallumage. Dans un mode de réalisation particulier, s'il reste plus d'un moteur à rallumer, l'algorithme reboucle à l'étape 501, permettant ainsi de prendre en compte d'éventuels changements (mode de fonctionnement, température...) intervenus depuis la dernière exécution de l'étape 503. S'il ne reste aucun moteur à rallumer, une étape 507 est effectuée.

Dans un mode de réalisation particulier, le contrôleur central 160 attend une confirmation du cockpit de l'aéronef 100, via l'avionique 150, avant de tenter de rallumer un autre moteur éteint.

Dans l'étape 507, le contrôleur central 160 met fin à la procédure de rallumage des moteurs éteints.

## Revendications

1. Procédé de rallumage de plusieurs moteurs éteints parmi un ensemble de *N* moteurs (110) d'un aéronef (100) en vol, *N* ≥ *2,* le procédé étant implémenté par un système (120) de gestion automatisée de rallumage en vol des moteurs qui inclut des contrôleurs (130, 160), chaque moteur (110) de l'aéronef (100) étant géré par un dit contrôleur (130),
dans lequel chaque contrôleur (130), qui est en charge d'un dit moteur i dudit ensemble, *i = 1, ...,N,* et qui détecte que ledit moteur *i* est éteint, effectue les étapes suivantes :
- couper (303) l'alimentation en énergie dudit moteur *i* ;
- effectuer (401) une mise en ventilation dudit moteur *i* ;
- vérifier (403) si au moins un autre moteur dudit ensemble est éteint ;
- lorsqu'aucun autre moteur dudit ensemble est éteint, effectuer (408) une tentative de rallumage dudit moteur *i* ;
**caractérisé en ce que**, lorsqu'au moins un autre moteur *j,j* = *1, ...,N,j* ≠ *i,* dudit ensemble est éteint, au moins un dit contrôleur (160, 130) effectue (405) une priorisation de rallumage de moteurs incluant les étapes suivantes :
- collecter (501), auprès des contrôleurs (130) en charge desdits moteurs (110), des informations concernant un état de santé de chaque moteur (110) ;
- déterminer (502), à partir des informations collectées, une information représentative d'une probabilité de rallumage de chaque moteur éteint ;
- déterminer (503) un ordre séquentiel de rallumage des moteurs éteints, en fonction des informations représentatives de la probabilité de rallumage de chaque moteur éteint ; et
- maintenir (407) en ventilation le moteur *i,* par le contrôleur (130) qui est en charge dudit moteur *i,* jusqu'à sélection dudit moteur *i* dans l'ordre séquentiel de rallumage des moteurs éteints.

2. Procédé selon la revendication 1, dans lequel les informations collectées incluent :
- une indication d'un mode de fonctionnement dans lequel se trouve le moteur en question ;
- une indication de vibrations captées par des capteurs du moteur en question ;
- une indication de température captée par des capteurs du moteur en question ;
- une indication de statut d'un système de démarrage du moteur en question ; et
- une indication de statut d'alimentation en énergie du moteur en question.

3. Procédé selon la revendication 2, dans lequel l'information représentative de la probabilité de rallumage d'un dit moteur est un score d'état de santé dudit moteur, et dans lequel le score d'état de santé dépend :
- d'une marge de température dudit moteur par rapport à un ou plusieurs premiers seuils prédéfinis ;
- d'une valeur pic de vibrations captées au niveau dudit moteur durant le vol par rapport à un ou plusieurs deuxièmes seuils prédéfinis ;
- d'un état opérationnel du système de démarrage dudit moteur ; et
- d'un état opérationnel de l'alimentation en énergie dudit moteur.

4. Procédé selon l'une des revendications 1 à 3, dans lequel chaque contrôleur, qui est en charge d'un dit moteur *i* dudit ensemble, *i* = *1, ...,N,* et qui détecte que ledit moteur *i* est éteint, effectue les étapes suivantes :
- déterminer (302) si un auto-rallumage du moteur i est en cours ;
- lorsqu'un auto-rallumage du moteur *i* est en cours, surveiller (305) le déroulement de l'auto-rallumage du moteur i *;*
- lorsqu'aucun auto-rallumage du moteur *i* n'est en cours ou lorsque l'auto-rallumage du moteur *i* est un échec, inclure le moteur *i* dans la priorisation de rallumage de moteurs.

5. Système (120) de gestion automatisée de rallumage en vol de moteurs d'un aéronef (100) comportant un ensemble de *N* moteurs, *N* ≥ 2, ledit système incluant des contrôleurs (130, 160), chaque moteur (110) de l'aéronef (100) étant géré par un dit contrôleur (130), dans lequel chaque contrôleur (130), qui est en charge d'un dit moteur *i* dudit ensemble, *i* = 1, *...,N,* et qui détecte que ledit moteur *i* est éteint, inclut de la circuiterie électronique configurée pour implémenter les étapes suivantes :
- couper l'alimentation en énergie dudit moteur *i* ;
- effectuer une mise en ventilation dudit moteur *i ;*
- vérifier si au moins un autre moteur dudit ensemble est éteint ;
- lorsqu'aucun autre moteur dudit ensemble est éteint, effectuer une tentative de rallumage dudit moteur *i ;*
**caractérisé en ce que**, lorsqu'au moins un autre moteur *j,j* = *1, ...,N,j* ≠ *i,* dudit ensemble est éteint, au moins un dit contrôleur (160, 130) inclut de la circuiterie électronique configurée pour implémenter une priorisation de rallumage de moteurs incluant les étapes suivantes :
- collecter, auprès des contrôleurs (130) en charge desdits moteurs (110), des informations concernant un état de santé de chaque moteur (110) ;
- déterminer, à partir des informations collectées, une information représentative d'une probabilité de rallumage de chaque moteur éteint ; et
- déterminer un ordre séquentiel de rallumage des moteurs éteints, en fonction des informations représentatives de la probabilité de rallumage de chaque moteur éteint ; et
- maintenir en ventilation le moteur *i,* par le contrôleur (130) qui est en charge dudit moteur *i,* jusqu'à sélection dudit moteur *i* dans l'ordre séquentiel de rallumage des moteurs éteints.

6. Aéronef (100) comportant un ensemble de *N* moteurs, *N* ≥ *2,* et un système (120) de gestion automatisée de rallumage en vol des moteurs selon la revendication 5.

7. Produit programme d'ordinateur comportant des instructions qui conduisent le système de la revendication 5 à exécuter le procédé selon l'une quelconque des revendications 1 à 4.

8. Support de stockage d'informations lisible par ordinateur, sur lequel est enregistré le produit programme d'ordinateur de la revendication 7.

## Patentansprüche

1. Verfahren zur Neuzündung mehrerer abgeschalteter Triebwerke aus einer Gesamtheit von *N* Triebwerken (110) eines Flugzeugs (100) im Flug, *N* ≥ 2, wobei das Verfahren durch ein System (120) zur automatischen Steuerung der Neuzündung der Triebwerke im Flug implementiert wird, das Steuereinheiten (130, 160) beinhaltet, wobei jedes Triebwerk (110) des Flugzeugs (100) von einer Steuereinheit (130) gesteuert wird,
wobei jede Steuereinheit (130), die für ein Triebwerk *i* der Gesamtheit, *i = 1,...,N,* zuständig ist und die erkennt, dass das Triebwerk *i* abgeschaltet ist, die folgenden Schritte durchführt:
- Unterbrechen (303) der Energieversorgung des Triebwerks *i*;
- Durchführen (401) einer Belüftung des Triebwerks *i*;
- Überprüfen (403), ob mindestens ein anderes Triebwerk der Gesamtheit abgeschaltet ist;
- wenn kein anderes Triebwerk der Gesamtheit abgeschaltet ist, Durchführen (408) eines Versuchs der Neuzündung des Triebwerks *i*;
**dadurch gekennzeichnet, dass**, wenn mindestens ein anderes Triebwerk *j,j = 1,...,N,j* ≠ *i,* der Gesamtheit abgeschaltet ist, mindestens eine Steuereinheit (160, 130) eine Priorisierung der Neuzündung von Triebwerken durchführt (405), die die folgenden Schritte umfasst:
- Erfassen (501) von Informationen über einen Gesundheitszustand jedes Triebwerks (110) an den Steuereinheiten (130), die für die Triebwerke (110) zuständig sind;
- Ermitteln (502) einer Information, die für eine Wahrscheinlichkeit der Neuzündung jedes abgeschalteten Triebwerks repräsentativ ist, aus den erfassten Informationen;
- Bestimmen (503) einer Abfolge der Neuzündung der abgeschalteten Triebwerke abhängig von den Informationen, die für die Wahrscheinlichkeit der Neuzündung jedes abgeschalteten Triebwerks repräsentativ sind; und
- Beibehalten (407) der Belüftung des Triebwerks *i* durch die Steuereinheit (130), die für das Triebwerk *i* zuständig ist, bis zur Auswahl des Triebwerks *i* in der Abfolge der Neuzündung der abgeschalteten Triebwerke.

2. Verfahren nach Anspruch 1, wobei die erfassten Informationen umfassen:
- eine Angabe zum Betriebsmodus, in dem sich das betreffende Triebwerk befindet;
- eine Angabe zu Schwingungen, die von den Sensoren des betreffenden Triebwerks erfasst werden;
- eine Angabe zur Temperatur, die von den Sensoren des betreffenden Triebwerks erfasst wird;
- eine Angabe zum Status eines Startsystems des betreffenden Triebwerks; und
- eine Angabe zum Status eines Energieversorgungssystems des betreffenden Triebwerks.

3. Verfahren nach Anspruch 2, wobei die Information, die für die Wahrscheinlichkeit der Neuzündung eines Triebwerks repräsentativ ist, ein Punktwert des Gesundheitszustands des Triebwerks ist und wobei der Punktwert des Gesundheitszustands abhängt von:
- einem Temperaturspielraum des Triebwerks im Verhältnis zu einem oder mehreren vorgegebenen ersten Schwellenwerten;
- einem Spitzenwert der Schwingungen, die während des Flugs am Triebwerk erfasst werden, im Verhältnis zu einem oder mehreren vorgegebenen zweiten Schwellenwerten;
- einem Betriebszustand des Startsystems des Triebwerks; und
- einem Betriebszustand der Energieversorgung des Triebwerks.

4. Verfahren nach einem der Ansprüche 1 bis 3, wobei jede Steuereinheit, die für ein Triebwerk *i* der Gesamtheit, *i = 1,...,N,* zuständig ist und die erkennt, dass das Triebwerk *i* abgeschaltet ist, die folgenden Schritte durchführt:
- Ermitteln (302), ob eine selbsttätige Neuzündung des Triebwerks *i* im Gange ist;
- wenn eine selbsttätige Neuzündung des Triebwerks *i* im Gange ist, Überwachen (305) des Ablaufs der selbsttätigen Neuzündung des Triebwerks *i*;
- wenn keine selbsttätige Neuzündung des Triebwerks *i* im Gange ist oder wenn die Neuzündung des Triebwerks *i* ein Fehlschlag ist, Einbeziehen des Triebwerks i in die Priorisierung der Neuzündung der Triebwerke.

5. System (120) zur automatischen Steuerung der Neuzündung von Triebwerken eines Flugzeugs (100) im Flug, das eine Gesamtheit von *N* Triebwerken, *N* ≥ *2*, umfasst, wobei das System Steuereinheiten (130, 160) beinhaltet und jedes Triebwerk (110) des Flugzeugs (100) von einer Steuereinheit (130) gesteuert wird,
wobei jede Steuereinheit (130), die für ein Triebwerk *i* der Gesamtheit, *i = 1,...,N,* zuständig ist und die erkennt, dass das Triebwerk *i* abgeschaltet ist, eine elektronische Schaltungsanordnung beinhaltet, die dazu konfiguriert ist, die folgenden Schritte zu implementieren:
- Unterbrechen der Energieversorgung des Triebwerks *i*;
- Durchführen einer Belüftung des Triebwerks *i*;
- Überprüfen, ob mindestens ein anderes Triebwerk der Gesamtheit abgeschaltet ist;
- wenn kein anderes Triebwerk der Gesamtheit abgeschaltet ist, Durchführen eines Versuchs der Neuzündung des Triebwerks *i*;
**dadurch gekennzeichnet, dass**, wenn mindestens ein anderes Triebwerk *j,j = 1,...,N,j* ≠ *i,* der Gesamtheit abgeschaltet ist, mindestens eine Steuereinheit (160, 130) eine elektronische Schaltungsanordnung beinhaltet, die dazu konfiguriert ist, eine Priorisierung der Neuzündung von Triebwerken zu implementieren, die die folgenden Schritte beinhaltet:
- Erfassen von Informationen über einen Gesundheitszustand jedes Triebwerks (110) an den Steuereinheiten (130), die für die Triebwerke (110) zuständig sind;
- Ermitteln einer Information, die für eine Wahrscheinlichkeit der Neuzündung jedes abgeschalteten Triebwerks repräsentativ ist, aus den erfassten Informationen; und
- Bestimmen einer Abfolge der Neuzündung der abgeschalteten Triebwerke abhängig von den Informationen, die für die Wahrscheinlichkeit der Neuzündung jedes abgeschalteten Triebwerks repräsentativ sind; und
- Beibehalten der Belüftung des Triebwerks *i* durch die für das Triebwerk *i* zuständige Steuereinheit (130) bis zur Auswahl des Triebwerks *i* in der Abfolge der Neuzündung der abgeschalteten Triebwerke.

6. Flugzeug (100), das eine Gesamtheit von *N* Triebwerken, *N* ≥ 2, und ein System (120) zur automatischen Steuerung der Neuzündung der Triebwerke im Flug nach Anspruch 5 umfasst.

7. Computerprogrammprodukt, das Anweisungen umfasst, die das System nach Anspruch 5 veranlassen, das Verfahren nach einem der Ansprüche 1 bis 4 durchzuführen.

8. Computerlesbares Informationsspeichermedium, auf dem das Computerprogrammprodukt nach Anspruch 7 gespeichert ist.

## Claims

1. Method of relighting several flamed-out engines in a set of *N* engines (110) of an aircraft (100) in flight, *N* ≥ 2, the method being implemented by an automated in-flight engine relighting management system (120) that includes controllers (130, 160), each engine (110) of the aircraft (100) being managed by one of said controllers (130),
wherein each controller (130), which is in charge of one of said engines *i* of said set, *i = 1,...,N,* and which detects that said engine *i* has flamed out, executes the following steps:
- cutting off (303) the energy supply to said engine *i*;
- windmilling (401) said engine *i*;
- checking (403) whether at least one other engine of said set has flamed out;
- if no other engine of said set has flamed out, attempting (408) to relight said engine *i*;
**characterized in that**, if at least one other engine *j, j = 1,...,N, j* ≠ *i,* of said set has flamed out, at least one of said controllers (160, 130) effects (405) an engine relighting prioritization including the following steps:
- collecting (501), from the controllers (130) in charge of said engines (110), information concerning the state of health of each engine (110);
- determining (502), from the collected information, information representing a probability of relighting each flamed-out engine;
- determining (503) a sequential order of relighting the flamed-out engines as a function of the information representing the probability of relighting each flamed-out engine; and
- keeping (407) the engine *i* windmilling, using the controller (130) in charge of said engine *i,* until said engine *i* is selected in the sequential order of relighting the flamed-out engines.

2. Method according to Claim 1, wherein the collected information includes:
- an indication of an operating mode of the engine in question;
- an indication of vibrations sensed by sensors of the engine in question;
- an indication of the temperature sensed by sensors of the engine in question;
- an indication of the status of a starting system of the engine in question; and
- an indication of the status of the energy supply to the engine in question.

3. Method according to Claim 2, wherein the information representing the probability of relighting one of said engines is a state-of-health score of said engine, and wherein the state-of-health score depends on:
- a temperature margin of said engine relative to one or more first predefined thresholds;
- a peak value of the vibrations sensed in said engine during the flight relative to one or more second predefined thresholds;
- an operational state of the starting system of said engine; and
- an operational state of the energy supply to said engine.

4. Method according to any one of Claims 1 to 3, wherein each controller, which is in charge of one of said engines *i* of said set, *i = 1,...,N,* and which detects that said engine *i* has flamed out, executes the following steps:
- determining (302) whether auto-relighting of the engine i is under way;
- if auto-relighting of the engine *i* is under way, monitoring (305) the progress of the auto-relighting of the engine *i*;
- if auto-relighting of the engine i is not under way or if the auto-relighting of the engine *i* has failed, including the engine *i* in the engine relighting prioritization.

5. Automated in-flight engine relighting management system (120) of an aircraft (100) including a set of *N* engines, N ≥ 2, said system including controllers (130, 160), each engine (110) of the aircraft (100) being managed by one of said controllers (130),
wherein each controller (130), which is in charge of one of said engines *i* of said set, *i = 1,...,N,* and which detects that said engine *i* has flamed out, includes electronic circuitry configured to implement the following steps:
- cutting off the energy supply to said engine *i*;
- windmilling said engine *i*;
- checking whether at least one other engine of said set has flamed out;
- if no other engine of said set has flamed out, attempting to relight said engine *i;*
**characterized in that**, if at least one other engine *j, j = 1,...,N, j* ≠ *i,* of said set has flamed out, at least one of said controllers (160, 130) includes electronic circuitry configured to implement an engine relighting prioritization including the following steps:
- collecting, from the controllers (130) in charge of said engines (110), information concerning the state of health of each engine (110);
- determining, from the collected information, information representing a probability of relighting each flamed-out engine;
- determining a sequential order of relighting the flamed-out engines as a function of the information representing the probability of relighting each flamed-out engine; and
- keeping the engine *i* windmilling, using the controller (130) in charge of said engine *i,* until said engine *i* is selected in the sequential order of relighting the flamed-out engines.

6. Aircraft (100) including a set of *N* engines, *N* ≥ 2, and an automated in-flight engine relighting management system (120) according to Claim 5.

7. Computer program product comprising instructions that cause the system in Claim 5 to execute the method according to any one of Claims 1 to 4.

8. Computer-readable information storage medium, on which the computer program product according to Claim 7 is saved.
